# DEMANDE DE BREVET EUROPEEN

(11) **EP 1 172 269 A1**
(43) Date de publication de la demande: **16.01.2002**
(21) Numéro de dépôt: 01202547.4
(22) Date de dépôt: 02.07.2001
(51) Int. Cl.: B60R 25/00, B60R 25/10, E05B 49/00

(54) **Vehicule automobile équipé d'un système d'acces dit "mains-libres" perfectionné pour localiser un badge portatif**

(30) Priorité: 03.07.2000 FR 0008619
(71) Demandeur: VALEO ELECTRONIQUE, 94042 Creteil Cédex (FR)
(72) Inventeur: Etter, Stephane, 91190 Gif sur Yvette (FR)
(74) Mandataire: Croonenbroek, Thomas

(57) **Abrégé**

Le véhicule automobile (V) est équipé d'un système d'accès dit « mains libres » comprenant un dispositif de reconnaissance disposé dans le véhicule avec plusieurs antennes et un organe d'identification ou badge portatif apte à communiquer à distance avec le dispositif de reconnaissance pour commander automatiquement le verrouillage ou le déverrouillage d'ouvrants dudit véhicule et/ou une autorisation de démarrage dudit véhicule. Lesdites antennes ont des zones de couvertures (Z1, Z2, Z3) qui s'intersectent, et le dispositif de reconnaissance est agencé pour activer successivement chaque antenne de façon à détecter une réponse ou l'absence de réponse de l'organe d'identification en fonction de l'antenne activée et pour localiser la présence de l'organe d'identification dans une zone particulière de couverture des antennes sur la base des détections de la réponse ou de l'absence de réponse de l'organe d'identification.

## Description

L'invention concerne un véhicule automobile équipé d'un système d'accès dit « mains libres » comprenant un dispositif de reconnaissance disposé dans le véhicule avec plusieurs antennes d'émission et un organe d'identification portatif apte à communiquer à distance avec le dispositif de reconnaissance pour commander automatiquement le verrouillage ou le déverrouillage d'ouvrants dudit véhicule et/ou une autorisation de démarrage dudit véhicule.

L'organe d'identification d'un tel système d'accès se présente sous la forme d'un badge de petites dimensions destiné à être porté par l'utilisateur du véhicule pour que celui-ci n'ait pas à manipuler de clé ou de télécommande pour verrouiller ou déverrouiller son véhicule, ainsi que pour le démarrer. Dans un véhicule équipé d'un tel système d'accès mains-libres, on utilise plusieurs antennes d'émission pour le dispositif de reconnaissance de façon à bien couvrir l'habitacle du véhicule et la proximité immédiate du véhicule à l'extérieur de celui-ci. Ces antennes d'émission, du type fil multibrins en boucle, sont généralement disposées dans le véhicule pour couvrir des zones distinctes et sont actionnées en même temps pour établir une communication avec l'organe d'identification présent dans la zone couverte par les antennes.

Le but de l'invention est de perfectionner un tel système d'accès mains libre pour le rendre capable d'identifier de façon assez précise la zone où se trouve l'organe d'identification dans la zone de couverture des antennes.

A cet effet, l'invention a pour objet un véhicule automobile équipé d'un système d'accès dit « mains libres » comprenant un dispositif de reconnaissance disposé dans le véhicule avec plusieurs antennes et un organe d'identification portatif apte à communiquer à distance avec le dispositif de reconnaissance pour commander automatiquement le verrouillage ou le déverrouillage d'ouvrants dudit véhicule et/ou une autorisation de démarrage dudit véhicule, caractérisé en ce que lesdites antennes ont des zones de couvertures qui s'intersectent, et en ce que ledit dispositif de reconnaissance est agencé pour activer successivement chaque antenne de façon à détecter une réponse ou l'absence de réponse de l'organe d'identification en fonction de l'antenne activée et pour localiser la présence de l'organe d'identification dans une zone particulière de couverture desdites antennes sur la base des détections de la réponse ou de l'absence de réponse de l'organe d'identification en fonction des antennes activées. En utilisant plusieurs antennes dont les zones de couverture se chevauchent en partie ou complètement, l'organe d'identification peut être localisé dans une zone correspond notamment à l'intersection de deux zones de couverture d'antennes se chevauchant partiellement.

Un exemple de réalisation du véhicule avec un système d'accès mains libre selon l'invention est décrit ci-dessous et illustré sur les dessins annexés.

La figure 1 est une représentation schématique d'un système d'accès mains libres selon l'invention.

La figure 2 est une représentation schématique d'un véhicule équipé d'un système d'accès mains libres selon l'invention.

La figure 3 est un organigramme illustrant la logique de traitement du dispositif de reconnaissance selon l'invention.

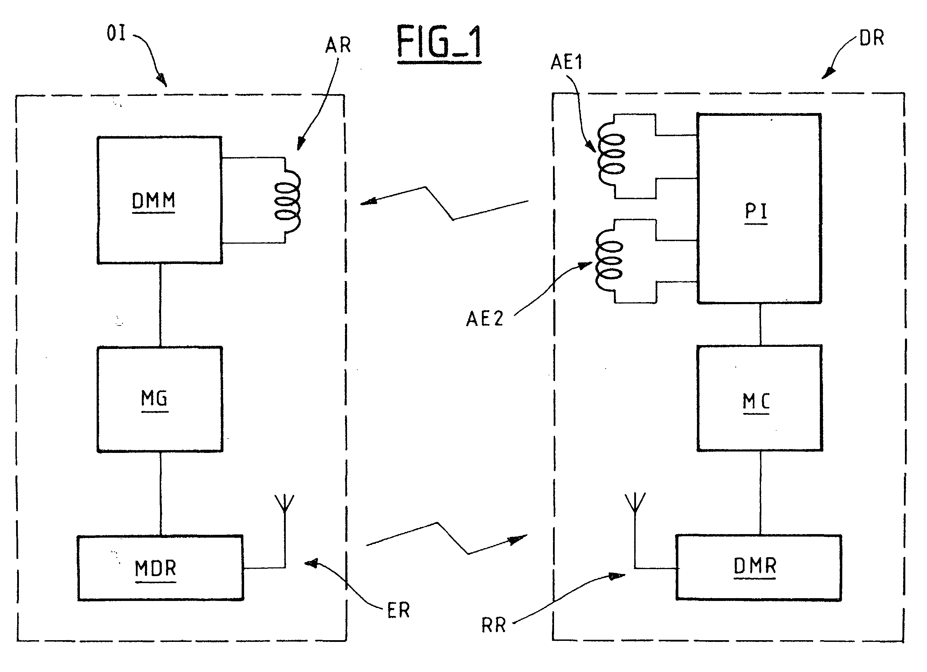

La figure 1 montre très schématiquement un organe d'identification OI et un dispositif de reconnaissance DR constituant un système d'accès dit mains libres selon l'invention destiné à équiper un véhicule.

Le dispositif de reconnaissance DR de ce système d'accès comprend plusieurs antennes émettrices de champ magnétique, dans le cas présent deux antennes AE1, AE2, qui sont activées de façon indépendante par un pilote d'antenne PI. Ces antennes sont conçues et disposées dans le véhicule de telle façon à avoir des zones de couvertures différentes qui s'intersectent comme on le verra par la suite. Il est entendu que chaque antenne peut avoir son propre pilote d'antenne PI sans sortir du cadre de l'invention.

Les antennes AE1, AE2 émettent des signaux destinés à être reçus par une antenne réceptrice de champ magnétique AR de l'organe d'identification OI. L'antenne AR est connectée à un démodulateur DMM lui-même connecté à un module de gestion MG de l'organe d'identification. En réponse à la réception de signaux émis par le dispositif de reconnaissance par l'intermédiaire des antennes AE1,AE2, le module de gestion MG renvoie des signaux réponse par l'intermédiaire d'un modulateur radiofréquence MGR et d'une antenne d'émission radiofréquence ER. Le dispositif de reconnaissance DR reçoit ces signaux radiofréquence par l'intermédiaire d'une antenne réceptrice radiofréquence RR et d'un démodulateur radiofréquence DMR.

Le ou les pilotes d'antennes PI et le démodulateur radiofréquence DMR sont connectés à un microcontrôleur MC qui est programmé pour réaliser des opérations d'authentification de l'organe d'identification OI avant de commander automatiquement le verrouillage ou le déverrouillage d'ouvrants du véhicule et/ou une autorisation de démarrage de celui-ci.

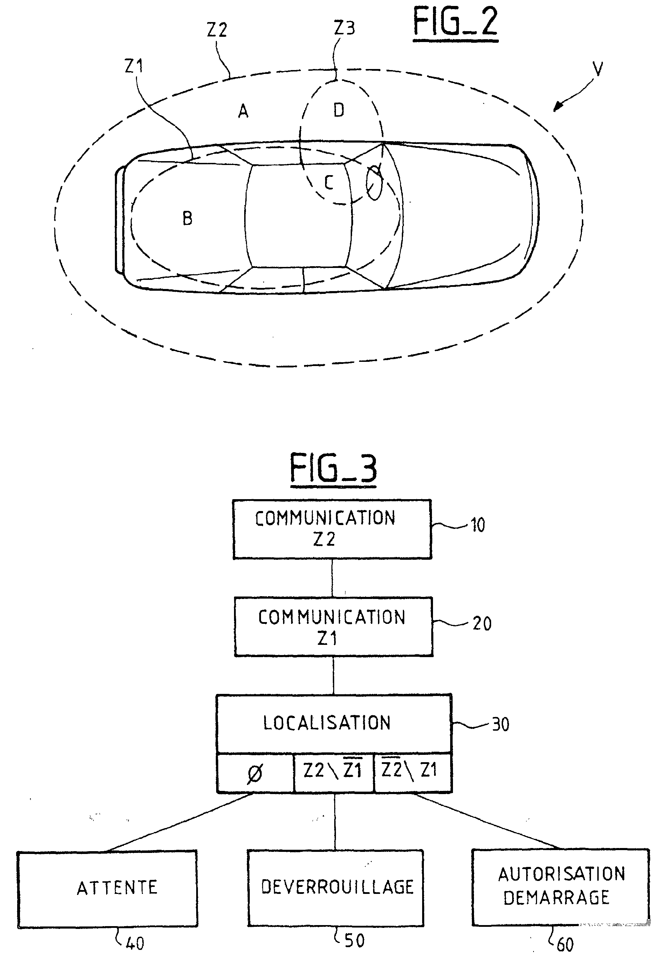

La figure 2 montre un véhicule V équipé d'un système d'accès mains libres selon l'invention. Le dispositif de reconnaissance DR est monté à l'intérieur du véhicule avec plusieurs antennes émettrices de champ magnétique. Sur la figure 2, le dispositif de reconnaissance avec les antennes d'émission de champ magnétique ne sont pas représentés mais seulement les zones de couverture respectives de ces antennes émettrices de champ magnétique, dans le cas présent trois zones de couvertures Z1,Z2 et Z3 correspondant à trois antennes.

Comme visible sur la figure 2, la première zone de couverture Z1 de forme ovale entoure l'intérieur de l'habitacle du véhicule V sans déborder vers l'extérieur du véhicule. La seconde zone de couverture Z2 de forme ovale entoure l'intérieur et l'extérieur du véhicule. La troisième zone de couverture Z3 de forme ovale entoure le siège du conducteur dans le véhicule et la proximité de la portière conducteur à l'extérieur du véhicule. On voit que les zones de couvertures Z1,Z2 et Z3 s'intersectent (c'est-à-dire se chevauchent partiellement ou totalement) pour définir un ensemble de zones particulières A,B,C,D où l'organe d'identification OI peut être localisé.

Selon l'invention, pour localiser l'organe d'identification, le dispositif de reconnaissance DR est agencé pour successivement activer chaque antenne correspondant aux zones Z1 à Z3 et détecter une réponse ou l'absence de réponse de l'organe d'identification en fonction de l'antenne activée. Sur la base des détections des réponses de l'organe d'identification en fonction des antennes activées, le dispositif de reconnaissance est apte, par une simple combinaison logique par exemple, à localiser une des zones A,B,C ou D dans laquelle se trouve l'organe d'identification et de façon subséquente commander de façon appropriée le verrouillage ou le déverrouillage d'ouvrants du véhicule et/ou une autorisation de démarrage du véhicule.

Ainsi, si la communication bidirectionnelle est possible entre le dispositif de reconnaissance DR et l'organe d'identification OI dans la zone de couverture Z1 mais pas dans la zone de couverture Z2, cela signifie que l'organe d'identification est situé dans la zone B ou C à l'intérieur du véhicule V et le dispositif de reconnaissance pourra commander l'autorisation de démarrage du véhicule par exemple. Si cette communication bidirectionnelle n'est pas possible dans la zone de couverture Z1, mais est possible dans la zone de couverture Z2, cela signifie que l'organe d'identification est situé dans la zone A à l'extérieur du véhicule et à proximité de celui-ci et le dispositif de reconnaissance pourra par exemple déverrouiller les ouvrants du véhicule. Si cette communication est possible à la fois dans la zone de couverture Z1 et dans la zone de couverture Z3, cela signifie que l'organe d'identification est dans la zone C sur le siège conducteur du véhicule. Si cette communication bidirectionnelle est possible dans la zone de couverture Z3 mais pas dans la zone de couverture Z1, cela signifie que l'organe d'identification est dans la zone D devant la portière conducteur.

Dans un tel dispositif, le fait que les zones de couverture s'intersectent permet d'avoir un plus grand nombre de zones de localisation de l'organe d'identification OI que le nombre d'antennes utilisées par le dispositif de reconnaissance. Ainsi, les zones de couverture Z1, Z2 et Z3 permettent de définir quatre zones de localisation A,B,C,D.

La figure 3 illustre par un organigramme, la logique de fonctionnement du dispositif de reconnaissance DR, et en particulier du micro-contrôleur MC, dans le cas où il comprend seulement deux antennes émettrices de champ magnétique telles que AE1 et AE2 correspondant par exemple aux zones de couverture Z1 et Z2.

En 10, le micro-contrôleur MC active, via le pilote d'antenne PI, l'antenne AE2 qui émet un signal dans la zone de couverture Z2. Le micro-contrôleur MC attend quelques dixièmes de secondes pour détecter une réponse ou l'absence de réponse de l'organe d'identification OI. En 20, le micro-contrôleur MC active ensuite, via le pilote d'antenne PI, l'antenne AE1 qui émet un signal dans la zone de couverture Z1. Le micro-contrôleur MC attends encore quelques dixièmes de secondes pour détecter une réponse ou l'absence de réponse de l'organe d'identification OI.

En 30, le micro-contrôleur MC combine les résultats des détections effectuées en 10 et en 20 pour localiser, dans le cas ou l'organe d'identification à répondu, cet organe d'identification dans la zone A ou dans la zone B comme explicité plus haut. Suivant la zone ou a été localisé l'organe d'identification, le micro-contrôleur MC poursuit le traitement en 40 par une mise en attente (l'organe d'identification n'a pas répondu dans aucune des zones de couverture Z1 et Z2), en 50 par un déverrouillage des ouvrants du véhicule (l'organe d'identification a répondu dans la zone de couverture Z2 mais pas dans Z1) et en 60 par une autorisation de démarrage du véhicule (l'organe d'identification à répondu dans la zone de couverture Z1 mais pas dans Z2).

L'invention s'applique également au cas où plusieurs organes d'identification peuvent communiquer avec le dispositif de reconnaissance qui est apte à identifier chacun des organes d'identification.

## Revendications

1. Un véhicule automobile (V) équipé d'un système d'accès dit « mains libres » comprenant un dispositif de reconnaissance (DR) disposé dans le véhicule avec plusieurs antennes (AE1, AE2) et un organe d'identification (QI) portatif apte à communiquer à distance avec le dispositif de reconnaissance pour commander automatiquement le verrouillage ou le déverrouillage d'ouvrants dudit véhicule et/ou une autorisation de démarrage dudit véhiculé, **caractérisé en ce que** lesdites antennes (AE1, AE2) ont des zones de couvertures (Z1, Z2, Z3) qui s'intersectent, et **en ce que** ledit dispositif de reconnaissance est agencé pour activer successivement chaque antenne de façon à détecter une réponse ou l'absence de réponse de l'organe d'identification en fonction de l'antenne activée et pour localiser la présence de l'organe d'identification dans une zone particulière de couverture desdites antennes sur la base des détections de la réponse ou de l'absence de réponse de l'organe d'identification en fonction des antennes activées.
